# FASCICULE DE BREVET EUROPEEN

(11) **EP 2 861 399 B1**
(45) Date de publication et mention de la délivrance du brevet: **28.12.2016**
(21) Numéro de dépôt: 13732402.6
(22) Date de dépôt: 18.06.2013
(51) Int. Cl.: B29C 33/08, B29C 45/73, B29C 33/06, B22D 17/22

(54) **PROCÉDÉ ET DISPOSITIF POUR LE PRÉCHAUFFAGE D'UN MOULE NOTAMMENT DE MOULAGE PAR INJECTION**
VERFAHREN UND VORRICHTUNG ZUM VORWÄRMEN EINER FORM, INSBESONDERE ZUM SPRITZGIESSEN
METHOD AND DEVICE FOR PREHEATING A MOLD PARTICULARLY INTENDED FOR INJECTION MOLDING

(30) Priorité: 18.06.2012 FR 1255698; 26.01.2013 FR 1350684
(43) Date de publication de la demande: 22.04.2015
(73) Titulaire: Roctool, 73370 Le Bourget du Lac (FR)
(72) Inventeur: FEIGENBLUM, José, F-73170 Saint Paul (FR); GUICHARD, Alexandre, F-73310 La Chapelle du Mont du Chat (FR)
(74) Mandataire: Ipside
(86) Numéro de dépôt international: PCT/EP2013/062570
(87) Numéro de publication internationale: WO 2013/189907

(56) Documents cités:
- WO-A1-2005/051571
- DE-A1- 4 308 008
- DE-A1-102008 060 496
- FR-A1- 2 937 270

## Description

L'invention concerne un procédé et un dispositif pour le préchauffage d'un moule. L'invention est plus particulièrement, mais non exclusivement, adaptée au préchauffage d'un moule utilisé dans un procédé de moulage par injection d'une matière plastique ou d'un métal à l'état liquide ou pâteux et plus spécialement dans l'injection d'une matière comprenant des renforts, par exemple, sous la forme de fibres courtes.

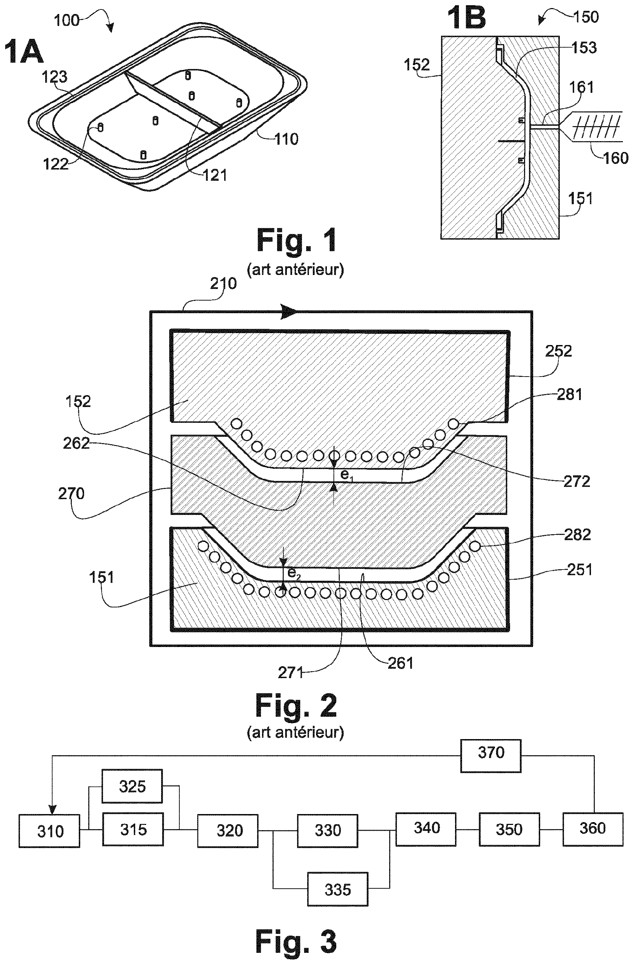

La figure 1A relative à l'art antérieur représente schématiquement une pièce (100) mince fabriquée en grande série par injection. À titre d'exemple cette pièce est un capot d'un matériel électronique. Lorsqu'elle est de grande dimension, par exemple, s'il s'agit du capot d'un téléviseur à grand écran, ladite pièce est constituée d'un polymère chargé par un renfort sous la forme de fibres ou de billes. Une telle pièce (100) comprend généralement un face (110), dite d'aspect, lisse ou avec une texture d'aspect, laquelle face est apparente lorsque ladite pièce est intégrée à l'appareil. Selon une réalisation particulière cette face comprend une décoration, laquelle décoration est obtenue en injectant la matière plastique dans le moule alors qu'un film de décoration est plaqué sur la face interne dudit moule. La pièce (100) comprend également une face (120), dite technique, laquelle face comprend de nombreux reliefs tels que des nervures (121), des puits de vis (122), des rainures (123) etc. Figure 1 B, la pièce (100) est réalisée par l'injection à chaud d'une matière plastique comprenant une charge de renfort dans la cavité (153) fermée d'un moule (150). Ce moule comprend ainsi une partie fixe (151) et une partie mobile (152). La matière injectée est amenée dans la cavité (153) par un conduit (161) pratiqué dans la partie fixe, lequel conduit est connecté à un dispositif d'injection (160), par exemple, une vis. Pour obtenir un remplissage de toute la cavité (153) et assurer un aspect uniforme, notamment de la face d'aspect de la pièce, le moule (150) doit être préchauffé préalablement à l'injection de sorte à obtenir une température uniforme de la surface de la cavité en contact avec le polymère injecté. Dans le cas d'un procédé de fabrication en grande série, il est souhaitable de réduire autant que possible les temps de préchauffage et de refroidissement du moule. Selon l'art antérieur, les surfaces moulantes du moule, plus particulièrement la surface moulante située sur la partie fixe dudit moule, sont par exemple chauffées par des dispositifs de chauffage placés dans des rainures ou des alésages sous lesdites surfaces moulantes. Ces aménagements sont difficiles à réaliser sur des moules de grandes dimension et fragilisent mécaniquement les surfaces moulantes. Le chauffage étant réalisé par conduction au sein même des parties du moule, un volume important de matière est chauffé ce qui implique une dépense énergétique élevée et rend délicat l'obtention d'une vitesse de chauffage élevée.

Pour accroître la vitesse de chauffage, selon l'art antérieur, les surfaces du moule de part et d'autre de la cavité peuvent être chauffées par induction.

Figure 2, un tel procédé de préchauffage est décrit dans le document WO 2010 046582. Selon ce procédé de l'art antérieur les deux parties (151, 152) du moule sont constituées d'un matériau électriquement conducteur et ferromagnétique, par exemple un acier comprenant une part importante de phase ferritique. Avantageusement chacune de ces deux parties est enserrée dans une carcasse (251, 252) constituée d'un matériau conducteur non magnétique, tel que du cuivre (Cu), à l'exception des surfaces (261, 262), dites moulantes, délimitant la cavité du moule. Un circuit d'induction (210), constitué par une ou plusieurs spires, entoure les deux parties (151, 152) du moule. Une pièce (270) intermédiaire, dite noyau, constituée d'un matériau électriquement conducteur, est placée entre les deux parties (151, 152) du moule. Ce noyau est isolé électriquement des deux parties (151, 152) du moule. Ainsi placé, le noyau (270) comprend des surfaces (271,272) séparées d'une faible distance des surfaces moulantes (261, 262) des deux parties du moule, délimitant ainsi deux entrefers (e₁, e₂) isolants avec lesdites surfaces moulantes. Lorsqu'un courant alternatif à haute fréquence circule dans le circuit d'induction, des courants induits circulent sur les faces (261, 271, 262, 272) du noyau et des surfaces moulantes en vis-à-vis, de part et d'autre de ces entrefers, provoquant l'échauffement rapide des surfaces moulantes (261, 262) ferromagnétiques. La perméabilité magnétique élevée de l'acier ferromagnétique, fait que les courants induits ne circulent qu'en surface, sur une profondeur réduite depuis lesdites surfaces moulantes. Ainsi, ce procédé de préchauffage permet de chauffer rapidement les surfaces moulantes par induction, en concentrant l'échauffement sur ces surfaces, lorsque le noyau (270) est intercalé entre celles-ci, le moule étant ouvert. Pour réaliser l'injection, le noyau est retiré, le moule (150) est fermé en rapprochant les deux parties (151, 152), la matière à l'état liquide ou pâteux est alors injecté dans la cavité de moulage par un ou plusieurs conduits (non représentés). La température de préchauffage est contrôlée par la puissance électrique délivrée dans le circuit d'induction et par le temps de chauffage. Cette température est choisie juste suffisante pour permettre un écoulement facile de la matière injectée dans toute la cavité, la chaleur de ladite matière étant ensuite évacuée par la masse du moule, lequel comporte avantageusement un circuit de refroidissement, par exemple au moyen de la circulation d'un fluide dans des conduits de refroidissement (281, 282) pratiqués dans chacune des parties du moule et s'étendant au travers de celles-ci à proximité sous-jacente des surfaces moulantes. Ainsi, la possibilité de ne chauffer que les surfaces moulantes sur une faible épaisseur procure un gain de productivité tant au chauffage qu'au refroidissement.

Si ce procédé de l'art antérieur est efficace pour le préchauffage de la surface moulante de la face d'aspect de la pièce, il n'est cependant pas adapté pour le préchauffage de la surface moulante de la face technique. En effet, les nombreux reliefs et les aménagements techniques que cette face comporte, tels que des tiroirs ou coulisseaux, ne permettent pas d'obtenir facilement un entrefer constant entre le noyau et la surface moulante correspondante, mais de plus, ces accidents de forme perturbent la circulation des courants induits, produisant des surchauffes locales voir des phénomènes d'arcs électriques.

Le document AT504784 décrit un procédé et un dispositif de préchauffage d'un moule adapté à un procédé de moulage par injection d'une matière plastique, comprenant un dispositif de préchauffage par rayonnement thermique d'une des faces moulante de ce moule. Afin d'obtenir un préchauffage rapide de ladite surface moulante, cette surface moulante est constituée par la face d'une pièce mince écartée du corps de moule lorsque ledit moule est en position ouverte. Ainsi le volume de matière chauffé par rayonnement est réduit. Toutefois ce mode de réalisation est complexe et ne peut pas être adapté à la surface moulante correspondant à la face technique de la pièce.

Le document DE 10 2008 060496décrit un procédé et un dispositif de préchauffage consistant à transférer une partie du moule comprenant la surface moulante à l'extérieur dudit moule pour son préchauffage.

Afin de résoudre les inconvénients de l'art antérieur, l'invention concerne un procédé pour le préchauffage d'une première surface moulante d'un moule, lequel moule comporte une position ouverte et une position fermée et délimitant selon cette position fermée une cavité fermée entre ladite première surface moulante préchauffée et une deuxième surface moulante, ledit procédé comprenant les étapes consistant à :
a. chauffer par induction une pièce, dite noyau, à l'extérieur du moule en plaçant ladite pièce à l'intérieur d'une spire parcourue par un courant alternatif ;
b. introduire ledit noyau entre les surfaces moulantes dudit moule en position ouverte ;
c. réaliser le préchauffage de la première surface moulante par transfert thermique entre ledit noyau et ladite surface moulante ;
d. retirer le noyau et fermer le moule.

Ainsi, le procédé objet de l'invention permet de chauffer le noyau à l'extérieur du moule, et de concentrer le chauffage sur la surface moulante, sans les difficultés liées à la forme de ladite surface moulante qui, selon ce procédé, est chauffée par transfert thermique. Le chauffage par induction du noyau étant séparé de la zone de moulage, ladite zone de moulage est moins encombrée et plus facile à intégrer dans une presse d'injection comparativement aux solutions de l'art antérieur.

L'invention peut être mise en oeuvre selon les modes de réalisation avantageux exposés ci-après, lesquels peuvent être considérés individuellement ou selon toute combinaison techniquement opérante.

Selon un mode de réalisation particulier, l'étape c) est réalisée par un transfert opéré majoritairement par conduction thermique. Ce mode de réalisation permet un transfert thermique rapide, et le chauffage du noyau à une température réduite, mais nécessite le contact entre la surface moulante et le noyau.

Selon un autre mode de réalisation, l'étape a) comprend le chauffage du noyau à une température comprise entre 700 °C et 1200 °C et l'étape c) est réalisée par un transfert thermique majoritairement par rayonnement.. Ce mode de réalisation est plus particulièrement adapté au chauffage d'une surface moulante complexe comprenant de nombreux reliefs. L'utilisation du chauffage par induction du noyau à l'extérieur du moule, permet de porter celui-ci à haute température pour obtenir un préchauffage rapide et sans contact de la surface moulante.

Avantageusement, l'étape a) est réalisée sous une atmosphère gazeuse inerte. Ainsi, les surfaces du noyau sont préservées de l'oxydation à haute température lors de la phase de chauffage ce qui améliore la longévité dudit noyau.

Avantageusement, l'étape a) est réalisée en plaçant le noyau entre deux écrans thermiques électriquement conducteurs, isolés électriquement l'un de l'autre et du noyau, l'ensemble étant placé à l'intérieur de la spire. Ainsi le noyau est chauffé plus rapidement et le moule et son environnement technique sont protegés du rayonnement thermique du noyau porté à haute température pendant la phase de chauffage de ce noyau.

Avantageusement, le moule comprend un canal pour la circulation d'un fluide caloporteur s'étendant sous la première surface moulante et le procédé objet de l'invention comprend , selon ce mode de réalisation, avant l'étape c) une étape consistant à :
e. purger ledit canal de tout fluide.

Ainsi, le canal de refroidissement purgé fait office de barrière thermiquement isolante entre la surface moulante et le reste du moule.

Avantageusement, la deuxième surface moulante est également chauffée par transfert thermique au cours de l'étape c). Ainsi, le préchauffage des deux surfaces moulantes permet de favoriser l'écoulement uniforme de la matière moulée entre les surfaces moulantes et évite l'installation de contraintes résiduelles dans la pièce réalisée par le procédé objet de l'invention.

Selon une variante avantageuse du procédé objet de l'invention, celui-ci comprend avant l'étape d) une étape consistant à :
f. préchauffer par induction la deuxième surface moulante délimitant la cavité fermée du moule en plaçant en vis-à-vis de ladite surface une pièce intermédiaire électriquement conductrice, isolée électriquement de ladite surface moulante et formant un entrefer avec cette surface moulante, la partie de moule correspondante et ladite pièce intermédiaire étant placées dans une spire parcourue par un courant alternatif.

Cette variante de réalisation du procédé objet de l'invention nécessite que le moule soit également pourvu d'un circuit d'induction. Cette variante de réalisation est particulièrement, mais non exclusivement, adaptée au cas d'un moulage comprenant un film de décoration plaqué sur la deuxième surface moulante et permet de réaliser le préchauffage de cette deuxième surface moulante sans dégrader, par brûlure, ledit film.

Selon un mode de réalisation particulier de cette variante du procédé objet de l'invention, la pièce intermédiaire est constituée par le noyau et l'étape f) est réalisée en même temps que l'étape c) alors que des moyens réalisent la conduction électrique entre le noyau et la première surface moulante préchauffée par transfert thermique. Ainsi au cours d'une même opération de préchauffage les deux surfaces moulantes du moule sont portées à la température de préchauffage adéquate, la première surface moulante l'étant uniquement par transfert thermique et la deuxième surface moulante majoritairement par induction.

Avantageusement, la deuxième surface moulante est couverte au moment de la réalisation de l'étape f) d'un film plastique de décoration et qu'il comprend après l'étape d) une étape consistant à :
g. injecter une matière plastique en fusion dans la cavité fermée du moule.

L'invention concerne également un dispositif pour la mise en oeuvre du procédé objet de l'invention, pour le préchauffage d'un moule comportant une position ouverte et une position fermée et délimitant selon cette position fermée une cavité fermée entre une première surface moulante et une deuxième surface moulante, lequel dispositif comprend :
i. un noyau ;
ii. des moyens d'induction, séparés du moule, pour le chauffage par induction du noyau, à l'intérieur d'une spire, dans une zone de chauffage ;
iii. des moyens pour transférer le noyau entre la zone de chauffage et le moule.

Ainsi le procédé objet de l'invention est mis en oeuvre de manière automatisée.

Selon une première variante du dispositif objet de l'invention, le noyau est constitué d'un bloc de graphite. Ce matériau, électriquement conducteur, peut être chauffé par induction à température élevée et présente un coefficient d'émissivité proche de 1 favorisant, le transfert thermique par rayonnement.

Selon une deuxième variante du dispositif objet de l'invention, le noyau est constitué d'un matériau métallique ferromagnétique dont la surface en vis-à-vis de la première surface moulante lors du préchauffage comprend un revêtement dont l'émissivité est supérieure à 0,9. Cette variante de réalisation permet d'obtenir un chauffage plus rapide du noyau tout en conservant une forte émissivité de la surface de celui-ci afin de favoriser le transfert thermique par rayonnement.

Avantageusement, le revêtement du noyau selon cette deuxième variante du dispositif objet de l'invention est constitué de carbone amorphe. Ce revêtement est particulièrement résistant à l'oxydation.

Avantageusement, le noyau est creux. Ainsi la masse dudit noyau est réduite ce qui accélère son chauffage et facilite sa manipulation.

Avantageusement, les moyens de transfert du dispositif objet de l'invention comprennent un robot, ledit robot comportant en outre des moyens pour démouler la pièce réalisée dans la cavité du moule. Ainsi le même dispositif de transfert est utilisé pour démouler la pièce et pour insérer le noyau entre les parties du moule ce qui permet de réduire l'encombrement du dispositif et d'améliorer la productivité du moulage en combinant les tâches au cours d'une même cinématique dudit robot.

Avantageusement, les moyens de chauffage par induction du dispositif objet de l'invention comprennent :
v. un premier écran constitué d'un matériau électriquement conducteur mais non ferromagnétique ;
w. un second écran constitué d'un matériau électriquement conducteur mais non ferromagnétique ;
x. des moyens pour rapprocher et écarter les deux écrans l'un de l'autre et des moyens pour maintenir le noyau entre les deux écrans lorsque ceux-ci sont en position rapprochée l'un de l'autre ;
y. un inducteur comprenant une spire entourant les deux écrans, laquelle spire est constituée de deux demi-spires liées chacune à l'un des écrans et comportant des connecteurs de sorte que la continuité électrique entre les deux demi-spires est réalisée lorsque les deux écrans sont en position rapprochée l'un de l'autre ;
z. des moyens pour isoler électriquement le noyau des deux écrans et créer un entrefer entre les faces du noyau en vis-à-vis des faces des écrans.

Ainsi le noyau est chauffé rapidement par induction en créant deux entrefers et l'environnement est protégé du rayonnement du noyau par les écrans.

Avantageusement, les écrans sont creux. Ainsi ceux-ci sont plus facile à manipuler et le dispositif est plus compact.

Avantageusement, les écrans comportent un circuit de refroidissement interne pour la circulation d'un fluide caloporteur. Ainsi le dispositif peut être utilisé à haute cadence sans risque de dégradation des écrans liée à leur surchauffe par leur exposition au rayonnement du noyau.

L'invention concerne également un dispositif pour le moulage par injection d'un produit à l'état liquide ou pâteux dans la cavité d'un moule comportant deux parties mobiles l'une par rapport à l'autre et délimitant entre elles une cavité fermée contenue entre deux surfaces moulantes, lequel dispositif comporte un dispositif de préchauffage selon l'un quelconque des modes de réalisation précédents.

Avantageusement, la surface moulante préchauffée majoritairement par rayonnement thermique comporte un revêtement dont l'émissivité est supérieure à 0,9. Ainsi le transfert thermique par rayonnement entre cette surface moulante et le noyau est amélioré.

L'invention est exposée ci-après selon ses modes de réalisation préférés, nullement limitatifs, et en référence aux figures 1 à 8, dans lesquelles :
- la figure 1 relative à l'art antérieur représente selon une vue en perspective, figure 1A, un exemple de pièce obtenue par injection plastique comprenant une face d'aspect et une face technique et, figure 1 B, selon une vue en coupe un exemple de réalisation d'un moule pour la fabrication d'une telle pièce ;
- la figure 2, également relative à l'art antérieur, montre, selon une vue en coupe, un exemple de réalisation d'un dispositif de préchauffage par induction des surfaces moulantes d'un moule ;
- la figure 3 est un synopsis d'un exemple de réalisation du procédé objet de l'invention ;
- la figure 4 montre, figure 4A, selon une vue en coupe, un exemple de réalisation du dispositif objet de l'invention comprenant, figure 4B, un dispositif de chauffage séparé du noyau, figure 4C un mode de réalisation du noyau comprenant un substrat et un revêtement d'émissivité proche de 1 ;
- la figure 5 représente selon une vue en coupe un exemple de réalisation de la zone de chauffage par induction du noyau, laquelle zone de chauffage comporte deux écrans réalisant deux entrefers avec les surfaces du noyau ;
- la figure 6 montre selon une vue en coupe un exemple de réalisation d'un noyau comportant un assemblage de deux matériaux ainsi qu'un exemple de réalisation d'une zone de chauffage du noyau adaptée à ce mode de réalisation ;
- la figure 7 représente, selon une vue en coupe, un exemple de réalisation du dispositif objet de l'invention, utilisant un noyau constitué de deux parties assemblées tel que représenté figure 6 l'une des surface moulante étant chauffée par transfert thermique et l'autre surface moulante par induction ;
- et la figure 8, montre un exemple de réalisation du dispositif objet de l'invention, comprenant un noyau en deux parties dissociables, dont une des parties est préchauffée par induction avant d'être assemblée avec l'autre partie dudit noyau.

Figure 3, selon un exemple de réalisation le procédé de préchauffage objet de l'invention est mis en oeuvre dans un procédé de moulage par injection. Selon une première étape (310) dite d'ouverture, le moule est ouvert. Au cours d'une étape de démoulage (315) la pièce réalisée est démoulée et évacuée. Parallèlement, au cours d'une étape (325) de chauffage, le noyau est chauffé par induction. Au cours d'une étape (320) d'insertion, le noyau est introduit chaud entre les deux parties ouvertes du moule. Les parties du moule sont rapprochées l'une de l'autre, de sorte à enserrer le noyau, au cours d'une étape (330) de préchauffage. Au cours de cette étape de préchauffage au moins une des surfaces moulantes du moule, laquelle est en contact avec le noyau ou à proximité de celui-ci est chauffée par transfert thermique. Ce transfert thermique est réalisé par conduction, convection ou par rayonnement selon le mode de réalisation du dispositif objet de l'invention.

Selon un deuxième mode de réalisation, le procédé comprend une étape (335) de chauffage par induction d'une des surface moulante, réalisée alors que le noyau a été introduit dans le moule.

Ainsi, au moins une des surfaces moulantes du moule, préférentiellement la surface moulante réalisant la face technique de la pièce moulée, est chauffée par transfert thermique en conduction, convection ou rayonnement, la surface moulante correspondant à la réalisation de la face d'aspect de la pièce moulée étant chauffée par transfert thermique ou par induction.

Lorsque les surfaces moulantes du moule ont atteint une température adéquate, le moule est ouvert et le noyau est retitré au cours d'une étape (340) de retrait. Puis, le moule est refermé (350) sous pression de sorte à constituer une cavité étanche entre les surfaces moulantes dudit moule. Le matériau constituant la pièce est injecté dans le moule au cours d'une étape (360) d'injection, laquelle étape d'injection est suivie d'une étape de refroidissement. Puis, le moule est à nouveau ouvert (310) pour réaliser le démoulage (315) de la pièce.

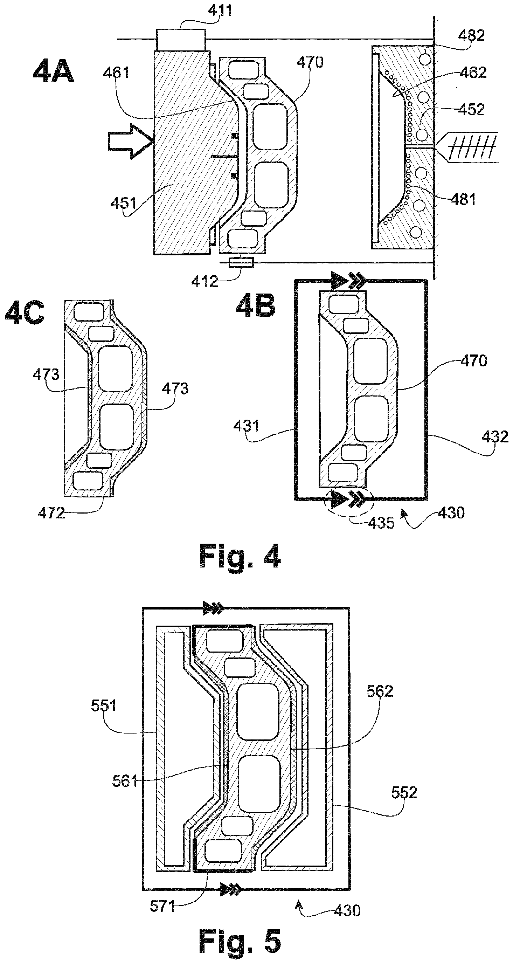

Figure 4A selon un exemple de réalisation du dispositif objet de l'invention, le moule comprend une partie fixe (452) qui, selon cet exemple, comprend une surface (462) moulante correspondant au moulage de la face d'aspect de la pièce finale, et une partie mobile (451) dont la surface moulante (461) correspond au moulage de la face technique de la pièce finale. La partie mobile (451) est en liaison glissière (411) par rapport à la partie fixe (452) du moule de sorte à permettre l'ouverture et la fermeture de la cavité délimitée par les surfaces moulantes (461,462) des deux parties (451,452) du moule. Un noyau (470) de préchauffage est connecté à des moyens (412), dits de transfert, permettant de déplacer ledit noyau (470) entre une position, figure 4A, dans laquelle le noyau se trouve entre les deux parties (451, 452) du moule et une position, figure 4B, ou le noyau est séparé du moule, et dans laquelle ledit noyau (470) peut être porté à une température déterminée, dans une zone dite de chauffage. Selon un exemple de réalisation ces moyens de transfert sont constitués par un robot ou un manipulateur, symbolisé, figure 4A, par une liaison pivot glissant permettant par une rotation d'au moins 90° de placer le noyau (470) entre les deux parties (451, 452) du moule ou de l'en extraire, et par un mouvement de translation, sensiblement perpendiculaire au plan de fermeture du moule, de rapprocher ou d'éloigner ledit noyau (470) de l'une ou l'autre des surfaces moulantes (461, 462). Avantageusement, le manipulateur (412) comporte des moyens (non représentés) permettant de démouler la pièce réalisée au cours de l'opération de moulage. Ainsi, le même manipulateur est utilisé dans un cycle comportant, moule ouvert, le démoulage de la pièce qui reste accrochée à la face moulante technique (461), ce démoulage étant réalisé par un mouvement de translation sensiblement perpendiculaire au plan de joint du moule, puis l'évacuation de la pièce par un mouvement de rotation autour de cette direction, pendant que le noyau est chauffé dans la zone de chauffage. Le manipulateur réalise ensuite la prise du noyau chaud et son introduction entre les deux parties (451,452) du moule. L'homme du métier adapte ce dispositif en fonction des cinématiques et de l'encombrement du moule et de la pièce réalisée.

Figure 4B, selon un exemple de réalisation, la zone de chauffage comprend un circuit d'induction comportant un inducteur (430) constitué de deux demi-spires (431, 432) connectées par des broches (435) et qui, une fois connectées, entourent le noyau (470). Selon cet exemple de réalisation, le noyau est constitué d'un matériau ou d'un assemblage de matériaux, de sorte que ledit noyau puisse être chauffé rapidement par induction. Comme le noyau (470) n'est pas soumis à des contraintes mécaniques élevées, un large choix de matériaux ou d'assemblage de matériaux est possible. Selon un premier exemple de réalisation le noyau (470) est constituée de graphite. Ce matériau peut être chauffé par induction jusqu'à une température très élevée, supérieure à 1000 °C, et présente une émissivité proche de 1, produisant un rayonnement thermique élevé.

Figure 4C, alternativement, le noyau comprend un substrat (471) constitué d'un matériau ferromagnétique, ce qui permet d'accélérer son chauffage par induction. Selon un exemple de réalisation adapté au chauffage d'une surface moulante (461, 462) par rayonnement, ledit substrat comporte sur toutes ou partie de ses surfaces extérieures un revêtement (472), constitué par exemple de carbone amorphe, permettant accroître l'émissivité de ces surfaces. Avantageusement, le substrat est choisi de sorte à présenter une température de Curie élevée, supérieure à 700 °C. À titre d'exemples non limitatifs, des alliages à base de fer (Fe) et de cobalt (Co), ou à base de fer (Fe) et de silicium (Si) permettent d'atteindre une telle température de Curie. Le coût élevé de ces matériaux est compensé par des dimensions réduites du noyau (470). Celui-ci ne supportant pas de contraintes mécaniques, est, selon des exemples de réalisation, constitué d'une simple tôle formée revêtue ou d'un corps creux, ce qui permet également de faciliter sa manipulation par le manipulateur (412) et réduit le temps de chauffage.

Figure 4B, la fréquence du courant alternatif circulant dans l'inducteur (430) est comprise en 10 kHz et 100 kHz et peut être adaptée selon la nature du matériau constituant le noyau (470).

Après avoir été porté à la température désirée, le noyau (470) est transféré entre les deux parties (451,452) du moule. Selon un premier exemple de réalisation, le noyau (470) ainsi chauffé est mis en contact avec une des surfaces moulantes (461) laquelle est alors chauffée par conduction. Selon un autre exemple de réalisation, ladite surface moulante (461) est chauffée sans contact par rayonnement et convection. Lorsque le noyau (470) est constitué de graphite, son coefficient d'émissivité est supérieur à 0,9 et une grande partie de l'énergie thermique absorbée lors de la phase de chauffage du noyau est ré-émise par rayonnement. Ainsi, selon ce mode de réalisation, le noyau (470) est préférentiellement chauffé à haute température, par exemple, à 1000 °C. Afin d'éviter une dégradation accélérée du graphite par oxydation à haute température, la zone de chauffage est avantageusement confinée sous une atmosphère protectrice dans un gaz inerte pendant le chauffage du noyau.

Lorsque le noyau est placé à proximité de la surface moulante à chauffer, le flux thermique émis vers cette surface par rayonnement atteint des valeurs de l'ordre de 150.10³ W.m⁻². Un tel flux thermique permet un chauffage rapide de la surface moulante, sans contact avec celle-ci, et s'avère efficace même si ladite surface comprend de nombreux reliefs, comme la surface moulante (461) de la face technique de la pièce moulée. Pour améliorer le transfert thermique par rayonnement entre le noyau (470) et ladite surface moulante (461), celle-ci est avantageusement revêtue par un revêtement dont l'émissivité est voisine de 1. Cet effet est obtenu, à titre d'exemples non limitatifs, par un revêtement de carbone amorphe déposé par voie physique en phase vapeur ou PVD, acronyme de « *Physical Vapor Deposition »* sur ladite surface (461) moulante, par un traitement chimique dit de brunissage de cette surface, ou encore par le dépôt électrolytique d'un chromage noir.

Selon un autre exemple de réalisation, les deux parties (451, 452) du moule sont rapprochées l'une de l'autre après que le noyau ait été introduit entre celles-ci, de sorte que les deux surfaces moulantes (461, 462) sont chauffées par transfert thermique. Selon les variantes de réalisation :
- les deux surfaces moulantes (461, 462) sont chauffées par conduction au contact du noyau (470) ;
- les deux surfaces moulantes (461, 462) sont chauffées par rayonnement et convection en les conservant hors de contact avec le noyau (470) ;
- une des surfaces moulantes est chauffée par rayonnement et convection et l'autre surface moulante par conduction.

Figure 4A, avantageusement, l'une des parties du moule (452) ou les deux parties de celui-ci, comprennent des canaux (481, 482) pour la circulation d'un fluide caloporteur. Ainsi, selon un exemple de réalisation, la partie fixe du moule (452), correspondant à réalisation de la face d'aspect de la pièce, comporte des canaux (482) pour le chauffage de cette partie et des canaux (481), proches de la surface moulante (462) pour le refroidissement de l'empreinte. Selon un exemple de réalisation (non représenté) la partie mobile (451) comporte également des canaux de refroidissement à proximité de la surface moulante (461) correspondante. Avantageusement, lesdits canaux de refroidissement (481) sont purgés avant le chauffage par transfert thermique de la surface moulante (461,462) considérée de sorte à limiter les transferts thermiques entre ladite surface moulante et le reste du moule.

Figure 5, selon un exemple de réalisation de la zone de chauffage, le noyau (470) y est placé entre deux écrans (551, 552) constitués d'un matériau électriquement conducteur mais non ferromagnétique, par exemple de cuivre. Le noyau (470) est isolé électriquement de ces deux écrans de sorte à créer des entrefers entre les surfaces du noyau et les surfaces des écrans (551, 552) en vis-à-vis. Selon un exemple de réalisation, le noyau (470) est enserré dans une carcasse (571) électriquement conductrice mais non ferromagnétique, par exemple en cuivre, en dehors des zones (561, 562) devant être chauffées. L'ensemble étant placé à l'intérieur de la spire de l'inducteur (430), lorsqu'un courant alternatif parcourt ledit inducteur le chauffage est concentré sur les surfaces (561, 562) du noyau devant être chauffées. Ainsi, le chauffage du noyau est accéléré. La surface desdits écrans (551, 552) est préférentiellement polie de sorte qu'elle réfléchisse le rayonnement thermique du noyau (470). Selon un exemple de réalisation, lesdits écrans sont de plus refroidis, par exemple au moyen de la circulation d'un fluide caloporteur, de sorte qu'ils soient protégés d'un échauffement excessif par convection du fait de leur proximité du noyau (470) porté à haute température.

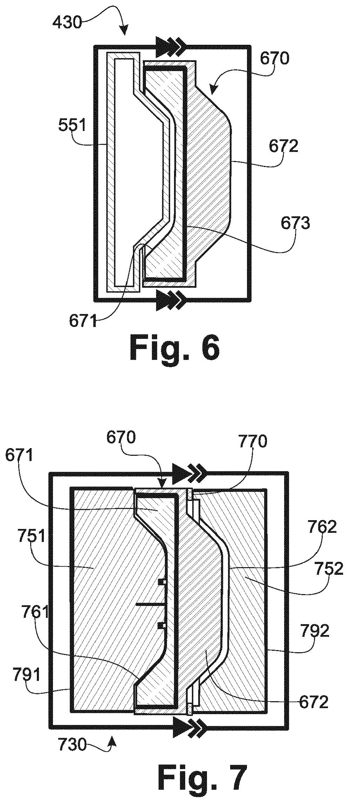

Figure 6, selon un autre exemple de réalisation le noyau (670) est constitué par un assemblage comportant deux matériaux. Un premier bloc (672) est constitué d'un matériau électriquement conducteur et non ferromagnétique, par exemple un alliage de cuivre ou d'aluminium. Ce bloc (672) enserre un second bloc (671) destiné à être chauffé à haute température par induction. Ce second bloc (671) est à titre d'exemple non limitatif constitué de graphite ou d'un acierferromagnétique à température de Curie élevée ayant optionnellement reçu un revêtement d'émissivité proche de 1. Selon un mode de réalisation, le second bloc (671) est isolé thermiquement du premier bloc (672) par une couche (673) constituée d'un matériau isolant thermiquement mais électriquement conducteur et résistant à haute température. À titre d'exemple non limitatif, cette couche isolante thermiquement est constituée d'une céramique d'oxynitrure de silicium et d'aluminium (SiAlON). Alternativement, la dite couche isolante thermiquement (673) est elle même composite. Lorsque ce noyau (670) composite est placé dans un circuit d'induction en vis-à-vis d'un écran (551) électriquement conducteur, la surface du second bloc (671) est rapidement portée à haute température alors que le premier bloc (672) constituant ledit noyau est peu échauffé.

Figure 7, un tel noyau composite (670) est, selon un exemple de réalisation, utilisé pour un chauffage combiné par transfert thermique par conduction, convection ou rayonnement d'une des surfaces moulantes du moule, préférentiellement la surface moulante (761) correspondant à la face technique de la pièce réalisée, alors que l'autre surface moulante (762) dudit moule, correspondant à la surface d'aspect, est chauffée par induction. Chaque partie du moule (751, 752) est constituée, par exemple, d'un acier ferromagnétique et est enserrée dans une carcasse (791, 792) constituée d'un matériau électriquement conducteur, par exemple du cuivre. Selon cet exemple de réalisation, le premier bloc (672) du noyau est isolé électriquement, par exemple au moyen de cales (770) isolantes, de la partie du moule (752) comportant la surface moulante (762) correspondant à la face d'aspect de la pièce de sorte à constituer un entrefer entre cette surface moulante et le premier bloc (672) du noyau (670). Le deuxième bloc (671) du noyau, qui a préalablement été chauffé par induction, est placé au contact ou proche de la surface moulante (761) correspondant à la face technique de la pièce, en assurant la continuité électrique entre cette surface moulante (761) et le premier bloc (672) du noyau (670). L'ensemble étant placé à l'intérieur des spires d'un circuit d'induction (730), lorsque ledit circuit est alimenté par un courant alternatif à haute fréquence, la surface moulante (762) en vis-à-vis du premier bloc (672) du noyau (670) est chauffée par induction, pendant que la surface moulante (761) correspondant à la face technique de la pièce est chauffée par transfert thermique entre cette surface moulante et le deuxième bloc (671) du noyau. Ce mode de réalisation est plus particulièrement adapté au cas où un film de décoration est placé sur la surface moulante (762) correspondant à la face d'aspect de la pièce avant l'injection et avant le préchauffage. En effet un chauffage de cette surface moulante par transfert thermique risquerait alors de brûler ce film de décoration.

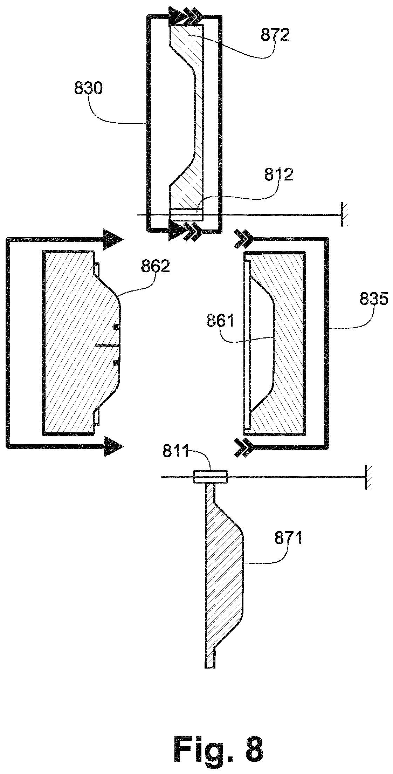

Figure 8, selon une variante du mode de réalisation précédent, le noyau est constitué de deux parties séparée (871, 872) assemblées au moment de leur introduction entre les deux parties du moule. Une première partie dudit noyau est chauffée par induction dans un circuit d'induction (830) sépraré du moule, préalablement à l'introduction de ladite première partie du noyau entre les deux parties du moule par un premier manipulateur (812). Selon ce mode de réalisation, cette première partie (872) du noyau est placée au contact de la surface moulante (862) correspondant à la face technique de la pièce afin de réaliser un chauffage de cette surface par conduction. La deuxième partie (871) du noyau est constituée d'un matériau électriquement conducteur mais non ferromagnétique tel qu'un alliage de cuivre ou d'aluminium. Cette deuxième partie (871) du noyau est placé en vis-à-vis de la surface moulante (861) correspondant à la face d'aspect de la pièce, isolée électriquement de la surface moulante et séparée de celle-ci par un entrefer, alors que des moyens (non représentés) assurent la continuité électrique entre la surface moulante (862) correspondant à la face technique de la pièce et la deuxième partie (871) du noyau. L'ensemble étant placé à l'intérieur des spires d'un circuit d'induction (835) enserrant le moule, la surface moulante (861) correspondant à la face d'aspect de la pièce est ainsi chauffée par induction.

La description ci-avant et les exemples de réalisation montrent que l'invention atteint les objectifs visés, en particulier, le procédé et le dispositif object de l'invention permettent une préchauffage rapide et direct des surfaces moulantes d'un moule d'injection sans usinage complexe du moule et sans affaiblir celui-ci. Ainsi, une partie des moyens du dispositif objet de l'invention peuvent être partagés par plusieurs moules, seul le noyau devant être adapté à la forme de la pièce, lequel noyau est avantageusement constitué d'un matériau facilement usinable.

## Revendications

1. Procédé pour le préchauffage d'une première (461, 761, 862) surface moulante d'un moule, lequel moule comporte une position ouverte et une position fermée et délimitant selon cette position fermée une cavité fermée entre ladite première (461, 761, 862) surface moulante préchauffée et une deuxième (462, 762, 861) surface moulante, comprenant les étapes consistant à :
a. chauffer (315) par induction une pièce, dite noyau (470, 670, 872) ;
b. introduire (320) ledit noyau entre les surfaces moulantes (461,462, 761, 762, 861, 862) dudit moule en position ouverte ;
c. réaliser (330) le préchauffage de la première (461, 761, 862) surface moulante par transfert thermique entre ledit noyau et ladite surface moulante ;
d. retirer (340) le noyau et fermer (350) le moule ;
**caractérisé en ce que**:
- le noyau est chauffé à l'extérieur du moule en plaçant ledit noyau à l'intérieur d'une spire (430, 830) parcourue par un courant alternatif

2. Procédé selon la revendication 1, dans lequel l'étape c) est réalisée par un transfert opéré majoritairement par conduction thermique.

3. Procédé selon la revendication 1, dans lequel l'étape a) comprend le chauffage du noyau à une température comprise entre 700 °C et 1200 °C et que l'étape c) est réalisée par un transfert thermique majoritairement par rayonnement.

4. Procédé selon la revendication 1, dans lequel l'étape a) est réalisée sous une atmosphère gazeuse inerte.

5. Procédé selon la revendication 1, dans lequel l'étape a) est réalisée en plaçant le noyau entre deux écrans (551, 552) thermiques électriquement conducteurs, isolés électriquement l'un de l'autre et du noyau, l'ensemble étant placé à l'intérieur de la spire (430).

6. Procédé selon la revendication 1, dans lequel le moule comprend un canal (481) pour la circulation d'un fluide caloporteur s'étendant sous la première ou la deuxième surface moulante et qu'il comprend avant l'étape c) (330) une étape consistant à :
e. purger ledit canal (481) de tout fluide.

7. Procédé selon la revendication 1, dans lequel la deuxième surface moulante (462) est également chauffée par transfert thermique au cours de l'étape c).

8. Procédé selon la revendication 1, comprenant avant l'étape d) une étape consistant à :
f. préchauffer par induction la deuxième surface moulante délimitant la cavité fermée du moule en plaçant en vis-à-vis de ladite surface une pièce intermédiaire (672, 871) électriquement conductrice, isolée électriquement de ladite surface moulante et formant un entrefer avec cette surface moulante (762, 861), la partie de moule correspondante et ladite pièce intermédiaire étant placées dans une spire (730, 835) parcourue par un courant alternatif.

9. Procédé selon la revendication 8, dans lequel la pièce intermédiaire (762) est constituée par le noyau et que l'étape f) est réalisée en même temps que l'étape c) alors que des moyens réalisent la conduction électrique entre le noyau et la première surface moulante préchauffée par transfert thermique.

10. Procédé selon la revendication 8, dans lequel la deuxième surface moulante (762, 861) est couverte au moment de la réalisation de l'étape f) d'un film plastique de décoration et qu'il comprend après l'étape d) une étape consistant à :
g. injecter (350) une matière plastique en fusion dans la cavité fermée du moule.

11. Dispositif pour la mise en oeuvre du procédé selon la revendication 1, pour le préchauffage d'un moule comportant une position ouverte et une position fermée et délimitant selon cette position fermée une cavité fermée entre une première (461, 761, 862) surface moulante et une deuxième (462, 762, 861) surface moulante, comprenant :
i. un noyau (470, 670, 770, 872) ;
ii. des moyens (430, 830), pour le chauffage par induction du noyau (470, 670, 770, 872), à l'intérieur d'une spire (430, 830) ;
**caractérisé en ce que** les moyens de chauffage (430, 830) du noyau sont dans une zone de chauffage séparée du moule et qu'il comporte :
iii. des moyens (412, 812,811) pour transférer le noyau entre la zone de chauffage et le moule.

12. Dispositif selon la revendication 11, dans lequel le noyau (470) est constitué d'un bloc de graphite.

13. Dispositif selon la revendication 11, dans lequel le noyau est constitué d'un matériau métallique ferromagnétique dont la surface en vis-à-vis de la première surface moulante lors du préchauffage comprend un revêtement (473) dont l'émissivité est supérieure à 0,9.

14. Dispositif selon la revendication 13, dans lequel le revêtement (473) du noyeau est constitué de carbone amorphe.

15. Dispositif selon la revendication 11, dans lequel noyau est creux.

16. Dispositif selon la revendication 11, dans lequel les moyens de transfert consistent en un robot, ledit robot comportant en outre des moyens pour démouler la pièce réalisée dans la cavité du moule.

17. Dispositif selon la revendication 11, dans lequel les moyens de chauffage par induction comprennent :
v. un premier écran (551) constitué d'un matériau électriquement conducteur mais non ferromagnétique ;
w. un second écran (552) constitué d'un matériau électriquement conducteur mais non ferromagnétique ;
x. des moyens pour rapprocher et écarter les deux écrans l'un de l'autre et des moyens pour maintenir le noyau entre les deux écrans lorsque ceux-ci sont en position rapprochée l'un de l'autre ;
y. un inducteur (430) comprenant une spire entourant les deux écrans, laquelle spire est constituée de deux demi-spires (431, 432) liées chacune à l'un des écrans et comportant des connecteurs de sorte que la continuité électrique entre les deux demi-spires est réalisée lorsque les deux écrans (551,552) sont en position rapprochée l'un de l'autre ;
z. des moyens pour isoler électriquement le noyau des deux écrans et créer un entrefer entre les faces du noyau en vis-à-vis des faces des écrans.

18. Dispositif selon la revendication 17, dans lequel les écrans sont creux.

19. Dispositif selon la revendication 17, dans lequel les écrans comportent un circuit de refroidissement interne pour la circulation d'un fluide caloporteur.

20. Dispositif pour l'injection d'un produit à l'état liquide ou pâteux dans la cavité d'un moule comportant deux parties (451, 452, 751, 752) mobiles l'une par rapport à l'autre et délimitant entre elles une cavité fermée contenue entre deux surfaces moulantes (461, 462, 761, 762, 861, 862), **caractérisé en ce qu'**il comprend un dispositif selon l'une quelconque des revendication 11 à 19.

21. Dispositif selon la revendication 20, dans lequel la surface moulante préchauffée majoritairement par rayonnement thermique comporte un revêtement dont l'émissivité est supérieure à 0,9.

## Patentansprüche

1. Verfahren zum Vorheizen einer ersten formgebenden Oberfläche (461, 761, 862) einer Gussform, die eine offene und eine geschlossene Position umfasst und in ihrer geschlossenen Position eine geschlossene Matrize zwischen der ersten vorgeheizten formgebenden Oberfläche (461, 761, 862) und einer zweiten formgebenden Oberfläche (462, 762, 861) abgrenzt, **dadurch gekennzeichnet, dass** das Verfahren folgende Etappen umfasst:
a. außerhalb der Gussform durch Induktionserwärmung (315) ein als Kern (470, 670, 872) bezeichnetes Teil in einer von einem Wechselstrom durchströmten Windung (430, 830) erhitzen;
b. Einführen (320) des Kerns zwischen den formgebenden Oberflächen (461, 462, 761, 762, 861, 862) der Gussform in geöffneter Position;
c. durch Wärmeübertragung zwischen dem Kern und der formgebenden Oberfläche die erste formgebende Oberfläche (461, 761, 862) vorheizen (330);
d. den Kern entfernen (340) und die Gussform (350) schließen.

2. Verfahren nach Anspruch 1, **dadurch gekennzeichnet, dass** die Etappe b) hauptsächlich durch eine Wärmeleitungsübertragung realisiert wird.

3. Verfahren nach Anspruch 1, **dadurch gekennzeichnet, dass** die Etappe a) das Erhitzen des Kerns auf eine Temperatur zwischen 700 °C und 1200 °C umfasst und dass die Etappe b) durch eine Wärmeübertragung hauptsächlich durch Strahlung realisiert wird.

4. Verfahren nach Anspruch 1, **dadurch gekennzeichnet, dass** die Etappe a) unter Inertgasatmosphäre realisiert wird.

5. Verfahren nach Anspruch 1, **dadurch gekennzeichnet, dass** die Etappe a) durchgeführt wird, indem der Kern zwischen zwei elektrisch leitenden Wärmeabschirmungen (551, 552) angeordnet wird, die zueinander und zum Kern elektrisch isoliert sind, wobei das Ganze innerhalb der Windung (430) angebracht wird.

6. Verfahren nach Anspruch 1, **dadurch gekennzeichnet, dass** die Gussform für die Zirkulation eines Kühlmittels einen Kanal (481) umfasst, der sich unter der ersten oder der zweiten formgebenden Oberfläche erstreckt und dadurch, dass es vor der Etappe c) (330) folgende Etappe umfasst:
e. Ablassen der gesamten Flüssigkeit aus dem Kanal (481).

7. Verfahren nach Anspruch 1, **dadurch gekennzeichnet, dass** die zweite formgebende Oberfläche (462) ebenfalls durch Wärmeübertragung während der Etappe c) erhitzt wird.

8. Verfahren nach Anspruch 1, **dadurch gekennzeichnet, dass** es vor der Etappe d) folgende Etappe umfasst:
f. durch Induktion die zweite formgebende Oberfläche vorheizen, welche die geschlossene Matrize der Gussform abgrenzt, indem gegenüber dieser Oberfläche ein elektrisch leitendes Zwischenteil (672, 871) angeordnet wird, das zur formgebenden Oberfläche elektrisch isoliert ist und mit dieser formgebenden Oberfläche (762, 861) einen Luftspalt bildet, wobei der entsprechende Gussformbereich und dieses Zwischenteil in eine von einem Wechselstrom durchströmte Windung (730, 835) angeordnet werden.

9. Verfahren nach Anspruch 8, **dadurch gekennzeichnet, dass** das Zwischenteil (762) aus dem Kern besteht und die Etappe f) gleichzeitig mit der Etappe c) ausgeführt wird, während Mittel die elektrische Leitung zwischen dem Kern und der durch Wärmeübertragung vorgeheizten ersten formgebenden Oberfläche realisieren.

10. Verfahren nach Anspruch 8, **dadurch gekennzeichnet, dass** die zweite formgebende Oberfläche (762, 861) zum Zeitpunkt der Durchführung von Etappe f) mit einem dekorativen Kunststofffilm abgedeckt ist und dass es nach der Etappe d) folgende Etappe umfasst:
g. Einspritzen (350) eines schmelzflüssigen Kunststoffes in die geschlossene Matrize der Gussform.

11. Vorrichtung für das Umsetzen des Verfahrens nach Anspruch 1, **dadurch gekennzeichnet, dass** es umfasst:
i. einen Kern (470, 670, 770, 872);
ii. von der Gussform getrennte Mittel (430, 830) zur Induktionserwärmung des Kerns (470, 670, 770, 872) in einer Aufheizzone
iii. Mittel (412, 812, 811) zum Übertragen des Kerns zwischen der Aufheizzone und der Gussform.

12. Vorrichtung nach Anspruch 11, **dadurch gekennzeichnet, dass** der Kern (470) aus einem Graphitblock besteht.

13. Vorrichtung nach Anspruch 11, **dadurch gekennzeichnet, dass** der Kern aus einem ferromagnetischen Metallwerkstoff besteht, dessen Oberfläche gegenüber der ersten formgebenden Oberfläche beim Vorheizen eine Beschichtung (473) umfasst, deren Emissionsvermögen über 0,9 liegt.

14. Vorrichtung nach Anspruch 13, **dadurch gekennzeichnet, dass** die Beschichtung (473) aus amorphem Kohlenstoff besteht.

15. Vorrichtung nach Anspruch 11, **dadurch gekennzeichnet, dass** der Kern hohl ist.

16. Vorrichtung nach Anspruch 11, **dadurch gekennzeichnet, dass** die Übertragungsmittel aus einem Roboter bestehen, der zudem Mittel zum Entformen des in der Matrize der Gussform hergestellten Teils umfasst.

17. Vorrichtung nach Anspruch 11, **dadurch gekennzeichnet, dass** die Mittel zur Induktionserwärmung umfassen:
v. eine erste Abschirmung (551) bestehend aus einem elektrisch leitenden, jedoch nicht ferromagnetischen Material;
v. eine zweite Abschirmung (552) bestehend aus einem elektrisch leitenden, jedoch nicht ferromagnetischen Material;
x. Mittel zum zueinander Nähern und voneinander Entfernen der beiden Abschirmungen und Mittel zum Halten des Kerns zwischen den beiden Abschirmungen, wenn sich diese in der zueinander genäherten Position befinden;
y. ein Feldsystem (430) mit einer die beiden Abschirmungen umwickelnden Windung, die aus zwei halben Windungen (431, 432) besteht, welche jeweils mit einer der Abschirmungen verbunden sind und Verbinder umfassen, sodass die elektrische Kontinuität zwischen den beiden halben Windungen hergestellt ist, wenn sich die beiden Abschirmungen (551, 552) in der zueinander genäherten Position befinden;
z. Mittel zum elektrischen Isolieren des Kerns gegenüber den zwei Abschirmungen und zum Erzeugen eines Luftspalts zwischen den Seiten des Kerns gegenüber den Seiten der Abschirmungen.

18. Vorrichtung nach Anspruch 17, **dadurch gekennzeichnet, dass** die Abschirmungen hohl sind.

19. Vorrichtung nach Anspruch 17, **dadurch gekennzeichnet, dass** die Abschirmungen für die Zirkulation eines Kühlmittels einen internen Kühlkreis umfassen.

20. Vorrichtung zum Einspritzen eines flüssigen oder dickflüssigen Mittels in die Matrize einer Gussform mit zwei zueinander beweglichen Abschnitten (451, 452, 751, 752), die zwischen sich eine zwischen zwei formgebenden Oberflächen (461, 462, 761, 762, 861, 862) enthaltene geschlossene Matrize abgrenzen, **dadurch gekennzeichnet, dass** sie eine Vorrichtung nach einem der Ansprüche 11 bis 19 umfasst.

21. Vorrichtung nach Anspruch 20, **dadurch gekennzeichnet, dass** die hauptsächlich durch Wärmestrahlung vorgeheizte formgebende Oberfläche eine Beschichtung aufweist, deren Emissionsvermögen über 0,9 liegt.

## Claims

1. A method for pre-heating a first (461, 761, 862) molding surface of a mold, which mold comprises an open position and a closed position and demarcates, in that closed position, a cavity enclosed between said first (461, 761, 862) pre-heated molding surface and a second (462, 762, 861) molding surface, **characterized in that** said method comprises the steps of:
a. induction heating (315) a part, known as the core (470, 670, 872), outside the mold by placing said part inside a turn (430, 830) through which alternating current flows;
b. inserting (320) said core between the molding surfaces (461, 462, 761, 762, 861, 862) of said mold in the open position;
c. pre-heating (330) the first (461, 761, 862) molding surface by thermal transfer between said core and said molding surface;
d. removing (340) the core and closing (350) the mold.

2. A method according to claim 1, **characterized in that** step (b) is carried out by a transfer that mostly takes place through thermal conduction.

3. A method according to claim 1, **characterized in that** step (a) comprises heating the core to a temperature between 700°C and 1200°C and step (b) is carried out by thermal transfer, mostly by radiation.

4. A method according to claim 1, **characterized in that** step (a) is carried out under an inert gaseous atmosphere.

5. A method according to claim 1, **characterized in that** step (a) is carried out by placing the core between two electrically conductive thermal screens (551, 552), electrically insulated from each other and the core, wherein the assembly is placed inside the turn (430).

6. A method according to claim 1, **characterized in that** the mold comprises a channel (481) for the circulation of heat-transfer fluid extending under the first or second molding surface and **in that** it comprises, before step (c) (330), a step of:
e. draining said channel (481) of all fluids.

7. A method according to claim 1, **characterized in that** the second molding surface (462) is also heated by thermal transfer during step (c).

8. A method according to claim 1, **characterized in that** it comprises, before step (d), a step of:
f. using induction to pre-heat the second molding surface demarcating the enclosed cavity of the mold by placing opposite said surface an electrically conductive intermediate part (672, 871), insulated electrically from said molding surface and forming a gap with that molding surface (762, 861), wherein the corresponding part of the mold and said intermediate part are placed in a turn (730, 835) through which alternating current flows.

9. A method according to claim 8, **characterized in that** the intermediate part (762) is made up of the core and step (f) is carried out at the same time as step (c) while means carry out electrical conduction between the core and the first molding surface pre-heated by thermal transfer.

10. A method according to claim 8, **characterized in that** the second molding surface (762, 861) is covered with decorative plastic film at the time step (f) is carried out and comprises, after step (d), a step of:
g. injecting (350) molten plastic in the enclosed cavity of the mold.

11. A device for implementing the method according to claim 1, **characterized in that** it comprises:
i. a core (470, 670, 770, 872);
ii. means (430, 830), separate from the mold, for induction heating of the core (470, 670, 770, 872) in a heating zone
iii. means (412, 812, 811) to transfer the core between the heating zone and the mold

12. A device according to claim 11, **characterized in that** the core (470) is made of a block of graphite.

13. A device according to claim 11, **characterized in that** the core is made of ferromagnetic metal having a surface opposite the first molding surface during pre-heating comprising coating (473) with emissivity above 0.9.

14. A device according to claim 13, **characterized in that** the coating (473) is made of amorphous carbon.

15. A device according to claim 11, **characterized in that** the core is hollow.

16. A device according to claim 11, **characterized in that** the transfer means consist of a robot, wherein said robot further comprises means for stripping the part made in the cavity of the mold.

17. A device according to claim 11, **characterized in that** the induction heating means comprise:
v. a first screen (551) made of electrically conductive but non-ferromagnetic material;
w. a second screen (552) made of electrically conductive but non-ferromagnetic material;
x. means to bring the two screens closer to and further away from each other and means to hold the core between the two screens when they are close to each other;
y. an inductor (430) comprising a turn surrounding the two screens, which turn is made up of two half-turns (431, 432) each connected to one of the screens and comprising connectors so that electrical continuity between the two half-turns is provided when the two screens (551, 552) are close to each other;
z. means to electrically insulate the core from the two screens and create a gap between the faces of the core opposite the faces of the screens.

18. A device according to claim 17, **characterized in that** the screens are hollow.

19. A device according to claim 17, **characterized in that** the screens comprise an internal cooling circuit for the circulation of heat-transfer fluid.

20. A device for injecting a product in the liquid or pasty state into the cavity of a mold comprising two parts (451, 452, 751, 752) that are mobile in relation to each other and demarcate between each other an enclosed cavity contained between two molding surfaces (461, 462, 761, 762, 861, 862), **characterized in that** it comprises a device according to any of the claims 11 to 19.

21. A device according to claim 20, **characterized in that** the molding surface pre-heated mostly by thermal radiation comprises coating with emissivity above 0.9.
